# EUROPEAN PATENT APPLICATION

(11) **EP 2 728 800 A1**
(43) Date of publication of application: **07.05.2014**
(21) Application number: 13189857.9
(22) Date of filing: 23.10.2013
(51) Int. Cl.: H04L 12/24, H04B 10/114, H04B 10/116

(54) **Data communications**

(30) Priority: 31.10.2012 GB 201219563
(71) Applicant: HEBER LIMITED, Stroud, Gloucestershire GL6 8NT (GB)
(72) Inventor: Gardiner, William, Cirencester, Gloucestershire GL7 2NQ (GB)
(74) Representative: Oxley, Robin John George

(57) **Abstract**

A data communications arrangement for receiving data transmitted by modulated light (28) is described, the arrangement comprising a receiving device (20) and a diagnostic device, the receiving device (20) comprising a sensor element (21) coupled to a connector (26), wherein the sensor element (21) converts incident modulated light (28) into a modulated electrical output signal and the connector (26) comprises a jack plug (22-25), the jack plug (22-25) being received, in use, by a microphone socket of the diagnostic device such that the output of the receiving device (20) can be analysed using an audio circuit of the diagnostic device.

## Description

This invention relates to an arrangement for use in data communications, for example diagnostic data using, for example, visible light.

It is useful to be able to obtain diagnostic information from electronically controlled apparatus, indicative of the operation of the apparatus. Such diagnostic information may be useful to maintenance or service engineers, and may comprise information that indicates whether the apparatus is faulty and/or what the nature of any faults may be. For example, it may be desirable to provide a washing machine service engineer with data representative of the output of a temperature sensor, thereby allowing the service engineer to determine whether a heating element and/or temperature sensor is functioning properly. One way in which diagnostic information may be communicated from such apparatus is by electrically connecting a diagnostic handset to a control unit of the apparatus. This may require the engineer to remove the case of the device, which can be time consuming and may give rise to safety concerns. Furthermore, the apparatus will need to be provided with a connector (such as a socket) to receive a corresponding connector (such as a plug) from the handset.

EP 1 594 237 discloses a communications system, suitable for use in transmitting diagnostic data from electronically controlled apparatus, in which a visible light source is modulated so as to transmit data. This allows diagnostic data to be transmitted from the apparatus without incurring significant additional cost, since such apparatus typically includes at least one indicator light source capable of being modulated by the control unit of the apparatus to transmit diagnostic data, provided that the control unit is configured with the appropriate software.

Unfortunately, while EP 1 594 237 provides a low cost diagnostic data transmission means, the data is of no utility unless it can be used, and the provision of a device for receiving the data has heretofore been significantly more complex and expensive. Prior art diagnostic handsets are relatively expensive, specialised items. Furthermore, prior art devices may be incapable of receiving data transmitted by modulated visible light, requiring a peripheral device for receiving the diagnostic data. Such a peripheral device must be compatible with the available electronic interfaces of the diagnostic handset, which may be relatively complex, resulting in an expensive peripheral.

The present invention seeks to address at least some of these problems.

According to the present invention there is provided a data communications arrangement for receiving data transmitted by modulated light, the arrangement comprising a receiving device and a diagnostic device, the receiving device comprising a sensor element coupled to a connector, wherein the sensor element converts incident modulated light into a modulated electrical output signal and the connector comprises a jack plug, the jack plug being received, in use, by a microphone socket of the diagnostic device such that the output of the receiving device can be analysed using an audio circuit of the diagnostic device.

Conveniently, the data is transmitted by modulation of visible light. However, the infrared or ultraviolet frequencies could be used is desired.

The connector may comprise, for example, a 3.5mm diameter jack plug such as a tip contact, first ring contact, second ring contact and sleeve contact connector. The transducer element may be coupled between the second ring contact and sleeve contact of the jack plug.

The sensor element conveniently comprises a photodiode.

A conductive path, for example incorporating a resistor, may be provided in parallel with the photodiode.

Conveniently, the device is arranged to output an electrical signal that is related to the varying intensity of the light incident on the sensor element.

The diagnostic device may comprise part of a smartphone, a tablet or a laptop computer. Preferably, an audio circuit is used to process the signals received via the microphone socket thereof. Such an arrangement is advantageous in that the signals can be reasonably easy processed without the need to use a receiving device of complex form and without the need to modify the diagnostic device.

The invention will further be described, by way of example, with reference to the accompanying drawings in which:
Figure 1 is a schematic of an apparatus with a light diagnostic data transmission system;
Figures 2a and 2b are schematic and circuit diagrams illustrating a receiving device according to an embodiment of the invention;
Figure 3 is a schematic diagram of an embodiment of the invention;
Figure 4 is a schematic diagram of an alternative embodiment of the invention; and
Figure 5 is a diagram showing another embodiment of the invention;

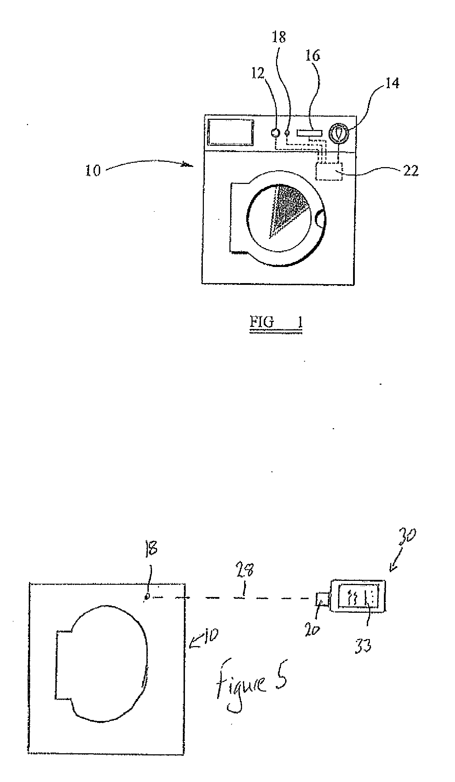

Figure 1 shows prior art apparatus 10 comprising an electronic controller 22, a power switch 12, visible light emitting device 18, display 16 and rotary switch 14. The apparatus 10 is a washing machine, the operation of which is controlled by the electronic controller 22 in response to the user operating the rotary switch 14. The light emitting device 18 may for example be a light emitting diode, and is under the control of the electronic controller 22. The light emitting device 18 is arranged to provide two functions: the first is to indicate to the user the functioning of the washing machine 10 by means of visible light, and the second is to transmit diagnostic data by modulation of the visible light output therefrom. More specifically, the electronic controller 22 is configured to vary the light emitted by light emitting device 18 to thereby transmit data in the light.

Suitable methods for encoding diagnostic information in modulated visible light are more fully discussed in EP 1 594 237, and may include MFM, F/ 2F and Manchester encoding techniques. The modulation frequency may preferably be greater than 50Hz so that variation in the intensity of the light emitting device 18 is not discernable by the human eye, but this is not essential. However, conveniently the modulation frequency is greater than this, preferably greater than 200Hz as described below. The light emitting device 18 is conveniently intended to be used to indicate that the apparatus is switched on, and so is illuminated at all times that the apparatus is in operation.

Accordingly, no additional hardware is required in order to output data from the apparatus. However, this is not essential to the invention.

Whilst the description herein relates primarily to the transmission of diagnostic data from a washing machine, it will be appreciated that this is merely one example of an apparatus with which the invention may be used, and the invention is not restricted in this regard.

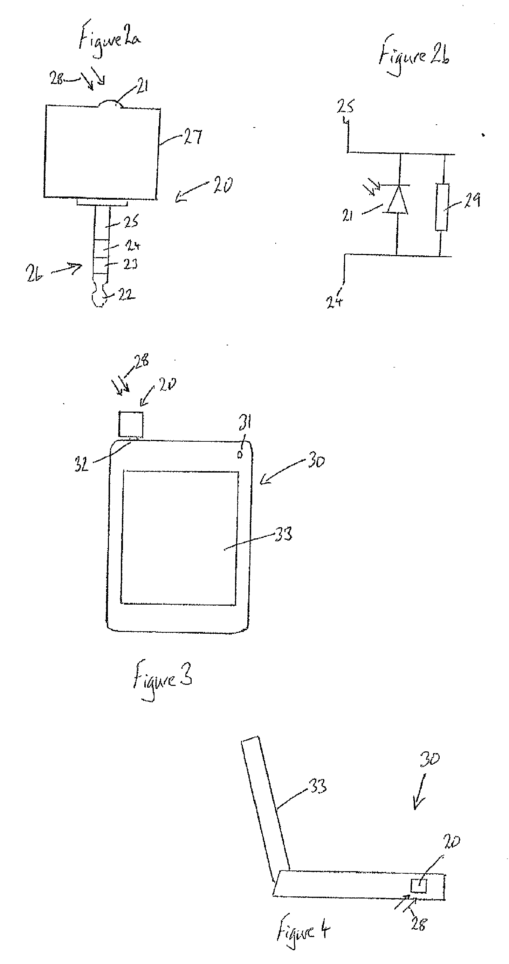

Figures 2a and 2b illustrate a diagnostic data receiving device according to an embodiment of the invention, comprising body 27, transducer element 21, resistor 29 and connector 26.

The connector 26 comprises a 3.5mm jack plug. The connector 26 has four electrical contacts: tip 22, first ring 23, second ring 24, and sleeve 25, and is thereby a tip, ring, ring, sleeve (TRRS) jack plug.

Jack plug connectors and their corresponding socket connectors are widely used for audio purposes. In a TRS connector, comprising only a first ring contact, the tip and ring contact are used for two audio channels, and the sleeve contact as the ground. In a TRRS connector, comprising a first and second ring contact, the sleeve contact is conventionally used for audio input from a microphone, and the second ring contact used as the ground connection. A DC bias voltage is typically applied to the sleeve contact of the TRRS socket so as to provide electrical power to condenser microphones connected thereto.

The transducer element 21 of the present embodiment of the invention is a photodiode connected between the second ring contact 24 and the sleeve contact 25. The transducer element 21 is arranged with the body 27 so that it can receive visible light 28, for example from a light emitting device that is transmitting data by modulating visible light as shown in Figure 1. When a positive bias voltage is applied to the sleeve contact 25 and ground is applied to the second ring contact 24, the photodiode 21 is reverse biased, and operates in a photoconductive mode, with a photocurrent substantially proportional to the incident light thereon.

In use, the device of Figures 2a and 2b is plugged into a TRRS jack socket of a suitable diagnostic device, for example a laptop computer, mobile phone, tablet device or the like. The device of Figures 2a and 2b subsequently provides an electrical signal to the TRRS jack socket that corresponds with variations in the intensity of the incident illumination on the photodiode. The jack socket of the diagnostic device is connected to an audio circuit thereof, the jack socket being arranged such that normally it would receive a jack plug associated with a microphone or the like. Often, a diagnostic device of this form will include an automatic gain control arrangement whereby the signal received from the receiving device will automatically be amplified if the signal is relatively weak. The distance between the light emitting device 18 and the receiving device is thus not critical.

In some devices having TRRS jack sockets, the microphone input is enabled by detecting a specific impedance between the sleeve contact 25 and second ring contact 24. The resistor 29 provides a convenient means of adjusting the impedance that the device 20 presents at the microphone input.

Whilst described here in connection with a TRRS jack plug and socket, it will be appreciated that other forms of connector may be used. For example, a TR jack socket forming a microphone input could be used, if desired.

In use, the operation of the light emitting device 18 under the control of the controller 22 results in the transmission of modulated light in the form of a series of flashes of light which are incident upon the transducer element 21, resulting in the generation of a pulsed output signal. The output is supplied to the diagnostic device via the microphone socket thereof, and the pulsed output signal is analysed by the diagnostic device using the audio circuit thereof. The receiving device performs no signal processing function, merely serving to convert the incident light into an electrical output signal. All of the processing and analysis is undertaken by the diagnostic device using the audio circuits thereof. The receiving device is thus of very simple form, not needing to be 'intelligent' in any way.

In order to ensure that the output signal is capable of analysis using the audio circuits of the diagnostic device, the modulation frequency at which the light is emitted is preferably at least 200Hz, this being the lower end of the frequency range at which a typical telephone audio circuit operates. As this frequency is higher than the 50Hz level above which the human eye is not usually sensitive to flickering, the modulation of the light emitted by the device 18 will not normally be perceptible to the human eye. The modulation frequency is preferably lower than about 4kHz. The audio circuits of most laptops, smart phones and tablet computers typically have an upper processing frequency of 4-8kHz, and so by ensuring that the modulation frequency is less than 4kHz, the audio circuits of most or all such devices will be able to analyse the output signal. Preferably, the modulation frequency is close to 4kHz, so as to use as high a frequency as possible and thereby maximise the data transmission rate, whilst maintaining the frequency within the range capable of being analised using the audio circuits of a device of this form.

Figure 3 illustrates the receiving device 20 connected to the microphone socket of a diagnostic data processing device 30. The connector plug 26 of the diagnostic data receiving device 20 is connected to the corresponding socket 32 of the diagnostic data processing device 30, and the diagnostic data processing device 30 is configured to provide a bias voltage on the sleeve contact 25 and a ground voltage on the second ring contact 24.

The diagnostic data receiving device 20 is operable to convert a signal in the form of modulated visible light 28 into an electrical signal provided to the contacts of the plug socket 32.

The diagnostic data processing device 30 in this example is a smart phone, for example an iPhone or a Samsung Galaxy S II, and is configured to receive the diagnostic data as an electrical signal from the diagnostic data receiving device 20 via the audio jack socket 32. The diagnostic data processing device 30 comprises a display 33, on which the data processing device 30 is configured to display information relating to the operation of the apparatus 10 from which the diagnostic data originates. Examples of such information include a substantially real time indication of the output of sensors within the apparatus, and a set of data that corresponds with a time history of the output from such sensors. The diagnostic data may include information stored on the apparatus, which may indicate how the apparatus has been operating over a longer period, or whether a particular error has been occurring intermittently.

Devices having a processor and a microphone input (such as a smartphone) typically have an analogue to digital converter (ADC) for converting an analogue electrical signal from the microphone input to a digital signal that can be processed by the device. Since such ADCs must be capable of dealing with audio, they typically have sampling rates of at least 8kHz, and in many cases of 48kHz, and so substantially no data loss will occur in the conversion of the low frequency analogue signal mentioned hereinbefore to digital signals using such converters.

Smartphones are relatively ubiquitous, and typically have an audio jack suitable for receiving electrical input from a microphone, and sufficient processing capability to demodulate an electrical signal from a diagnostic data receiving device according to the invention. Furthermore, smartphones typically include a display that is suitable for displaying information based on the diagnostic data to a service or maintenance engineer. An application may be provided on the smartphone that configures the device to receive diagnostic data from the audio jack, and to display information based on the diagnostic data. Other integral light sensors, such as those intended for use in measuring ambient light levels, could be used if desired.

Figure 4 shows an further embodiment, according to the invention, wherein the diagnostic data processing device 30 is a laptop, with the connector of the diagnostic data receiving device 20 of Figures 2a and 2b being connected to a corresponding audio input connector of the laptop 30. The laptop 30 is configured to receive diagnostic data via the audio input and to display information based on the received diagnostic data.

Figure 5 illustrates a process according to another embodiment of the invention, whereby apparatus 10 transmits diagnostic data by modulated visible light 28 from a light emitting device 18. In this example the apparatus 10 is a washing machine and the light emitting device 18 is an LED. The light 28 is received by the diagnostic data receiving device 20, which converts the modulated visible light to a modulated electrical signal, and provides the modulated electrical signal to a diagnostic data processing device 30 via an audio jack connector. The diagnostic data receiving device 30 (in this case a smartphone) receives diagnostic data in the form of the modulated electrical signal, and in reliance on this data, displays information at a display of the diagnostic data processing device.

Whilst the arrangements described hereinbefore use visible light to transmit data, it will be appreciated that other light frequencies including, for example, infra red and ultra violet may be used.

The arrangement of the invention is advantageous in that the receiving device is of relatively simple form, the diagnostic device can take the form of a tablet device, smart phone or laptop computer or the like, the diagnostic device not requiring any modification to permit use of the invention. The existing (digital) audio circuits of the device are used to process the received signals and extract the data content which may be displayed using the normal display of the diagnostic device. If present, an automatic gain control function of the diagnostic device may be used to provide automatic amplification of the received signals where required.

Whilst specific embodiments of the invention have been described hereinbefore, it will be appreciated that a number of modifications and alterations may be made thereto without departing from the scope of the invention.

## Claims

1. A data communications arrangement for receiving data transmitted by modulated light, the arrangement comprising a receiving device (20) and a diagnostic device (30), the receiving device (20) comprising a sensor element (21) coupled to a connector (26), wherein the sensor element (21) converts incident modulated light into a modulated electrical output signal and the connector (26) comprises a jack plug, the jack plug being received, in use, by a microphone socket (32) of the diagnostic device (30) such that the output of the receiving device (20) can be analysed using an audio circuit of the diagnostic device (30).

2. The arrangement of claim 1, wherein the connector (26) comprises a 3.5mm diameter jack plug.

3. The arrangement of claim 1 or claim 2, wherein the connector (26) comprises a tip contact, first ring contact, second ring contact and sleeve contact.

4. The arrangement of claim 3, wherein the sensor element (21) is be coupled between the second ring contact and sleeve contact of the jack plug.

5. The arrangement of any preceding claim, wherein the sensor element (21) comprises a photodiode.

6. The arrangement of claim 5, wherein a conductive path is provided in parallel with the photodiode.

7. The arrangement of claim 6, wherein the conductive path incorporates a resistor (29).

8. The arrangement of any of the preceding claims wherein the sensor element (21) is adapted to output an electrical signal that is related to the variations in the intensity of the light incident thereon.

9. The arrangement of any of the preceding claims, and adapted to receive electrical power from the connector (26).

10. The arrangement of any preceding claim, wherein the sensor element (21) is sensitive to pulsed incident light transmitted at a modulation frequency falling within the range 200Hz to 4kHz, and the audio circuit of the diagnostic device (30) is capable of processing signals of frequency falling within the range 200Hz to 4kHz.

11. The arrangement of any preceding claim, wherein the diagnostic device (30) comprises a processor and a display.

12. The arrangement of claim 11, wherein the diagnostic device (30) comprises part of a smartphone, tablet or laptop computer.

13. A method of displaying information relating to the operation of an electronically controlled apparatus, comprising the steps of:
transmitting diagnostic data relating to the operation of the apparatus by modulated light;
receiving the modulated light at a communications arrangement according to any of the preceding claims;
and
in reliance on the output signal received by the diagnostic device (30), displaying the information at a display of the diagnostic device (30) indicative of the operation of at least part of the electronically controlled apparatus.
